# EUROPÄISCHE PATENTSCHRIFT

(11) **EP 3 575 021 B1**
(45) Veröffentlichungstag und Bekanntmachung des Hinweises auf die Patenterteilung: **14.05.2025**
(21) Anmeldenummer: 18174898.9
(22) Anmeldetag: 29.05.2018
(51) Int. Cl.: B23B 5/28, B23B 1/00

(54) **VERFAHREN ZUR HERSTELLUNG WENIGSTENS EINES SCHEIBEN- ODER RINGSCHEIBENFÖRMIGEN BAUTEILS UND BEARBEITUNGSZENTRUM**
METHOD FOR PRODUCING AT LEAST ONE DISC OR RING DISC -SHAPED COMPONENT AND MACHINING CENTRE
PROCÉDÉ DE FABRICATION D'AU MOINS UN COMPOSANT EN FORME DE DISQUE OU DE DISQUE ANNULAIRE ET CENTRE D'USINAGE

(43) Veröffentlichungstag der Anmeldung: 04.12.2019
(73) Patentinhaber: AFW Holding GmbH, 4656 Kirchham (AT)
(72) Erfinder: Weingärtner, Dominik, 4643 Pettenbach (AT)
(74) Vertreter: Hafner & Kohl PartmbB

(56) Entgegenhaltungen:
- DE-U1- 202011 103 889
- DE-U1- 8 435 288
- GB-A- 752 088
- US-A- 1 522 770
- US-A- 1 759 098
- US-A1- 2005 120 557
- US-A1- 2006 042 091
- US-A1- 2012 319 364

## Beschreibung

Die Erfindung betrifft ein Verfahren zur Herstellung wenigstens eines ringscheibenförmigen Bauteils in Form eines eine Nabe aufweisenden Rads für ein Schienenfahrzeug.

Entsprechende Verfahren zur Herstellung von ringscheibenförmigen Bauteilen, d. h. ringscheibenförmigen Rädern, wie sie als Räder für Schienenfahrzeuge bzw. Eisenbahnräder eingesetzt werden, sind aus dem Stand der Technik an und für sich bekannt.

Entsprechende Verfahren umfassen typischerweise die Bereitstellung eines spanend zu bearbeitenden ringscheibenförmigen Rohteils, welches in einer Aufspannsituation aufgespannt und in dieser unter Ausbildung des herzustellenden Bauteils mechanisch, d. h. insbesondere spanend, bearbeitet wird.

Bis dato ist das Rohteil in der Aufspannsituation dabei typischerweise so angeordnet bzw. ausgerichtet, dass dessen Symmetrie- bzw. Zentralachse in einer vertikalen Achse bzw. Ebene liegt.

Aus dieser Aufspannsituation können sich diverse Nachteile ergeben, welche z. B. darin bestehen bzw. daraus resultieren, dass sich auf dem spanend zu bearbeitenden Rohteil bearbeitungsbedingt entstehender Materialabtrag, d. h. insbesondere Späne, und/oder Kühlflüssigkeit ansammeln, was sich negativ auf den spanenden Bearbeitungsprozess auswirken kann.

US 2012/0319364 A1, US 2005/120557 A1 sowie US 2006/042091 A1 offenbaren jeweils ein Verfahren zur Herstellung einer Kraftfahrzeugfelge.

GB 752 088 A, DE 20 2011 103 889 U1 sowie US 1 759 098 A und US 1 552 770 A offenbaren jeweils ein Verfahren zur Herstellung eines Eisenbahnrads.

Der Erfindung liegt die Aufgabe zugrunde, ein demgegenüber verbessertes Verfahren zur Herstellung wenigstens eines ringscheibenförmigen Bauteils in Form eines eine Nabe aufweisenden Rads für ein Schienenfahrzeug anzugeben.

Die Aufgabe wird durch ein Verfahren gemäß Anspruch 1 gelöst. Die hierzu abhängigen Ansprüche betreffen mögliche Ausführungsformen des Verfahrens.

Das hierin beschriebene Verfahren dient zur Herstellung wenigstens eines (im Wesentlichen) ringscheibenförmigen Bauteils in Form eines eine Nabe aufweisenden Rads für ein Schienenfahrzeug, z. B. eines Antriebsrads für Schienenfahrzeuge.

Das herzustellende Bauteil kann unter Umständen, d. h. je nach konkretem bestimmungsgemäßen Einsatzgebiet des Bauteils, eine von einer geometrisch definierten ringscheibenförmigen Geometrie abweichende ringscheibenartige Geometrie aufweisen. Entsprechende Abweichungen können z. B. in einer querschnittlich betrachtet z. B. stufenartig konturierten Gestaltung des Außenumfangs bestehen, wie sie z. B. bei Eisenbahnrädern vorzufinden ist.

Das erfindungsgemäße Verfahren umfasst die Schritte gemäß Anspruch 1.

In einem ersten Schritt des Verfahrens wird wenigstens ein mechanisch, d. h. im Rahmen der Erfindung spanend, zu bearbeitendes Rohteil bereitgestellt. Das Rohteil weist eine Zentralachse auf. Bei der Zentralachse kann es sich z. B. um eine Symmetrieachse des Rohteils handeln. Das Rohteil weist eine rotationssymmetrische, d. h. eine ringscheibenförmige, Geometrie auf. Das ringscheibenförmigeRohteil weist eine Scheibenebene auf. Die Scheibenebene ist typischerweise von der Zentralachse des Rohteils in einem rechten Winkel durchsetzt; die Zentralachse des Rohteils ist sonach typischerweise lotrecht zu der Scheibenebene des Rohteils ausgerichtet.

Das Rohteil bzw. jedenfalls das erfindungsgemäß herzustellende ringscheibenförmige Bauteil kann unterschiedliche Querschnittsgeometrien bzw. -flächen aufweisende Abschnitte aufweisen. Beispielsweise kann das Rohteil bzw. das herzustellende Bauteil im Bereich des Außenumfangs eine andere Querschnittsgeometrie als in - radial betrachtet - weiter innen liegenden Bereichen aufweisen. Für die erfindungsgemäße Herstellung eines Rads, insbesondere eines Eisenbahnrads, gilt, dass der Außenumfang des spanend bearbeiteten Rohteils eine spätere Lauffläche des Bauteils bildet. Typischerweise wird ein metallisches Rohteil, d. h. ein Rohteil aus einem, z. B. eisenbasierten, metallischen Werkstoff, bereitgestellt, entsprechend handelt es sich bei dem herzustellenden ringscheibenförmigen Bauteil um ein metallisches Bauteil, d. h. ein Bauteil aus einem, z. B. eisenbasierten, metallischen Werkstoff. Bei dem Rohteil handelt es sich insbesondere um ein Halbfabrikat bzw. Halbzeug. Konkret kann es sich bei dem Rohteil um ein metallisches Guss- bzw. Schmiedeteil, d. h. ein Rohteil aus einer metallischen Guss- bzw. Schmiedelegierung, handeln.

Ein entsprechendes bereitgestelltes, mechanisch zu bearbeitendes Rohteil wird in einem auf den ersten Schritt folgenden zweiten Schritt des Verfahrens in wenigstens einer Aufspannsituation, d. h. insbesondere einer Aufspannposition bzw. Aufspannausrichtung des Rohteils (im Weiteren wird allein der Begriff "Aufspannsituation" verwendet, welcher eine bestimmte Aufspannposition bzw. Aufspannausrichtung des Rohteils beinhaltet), aufgespannt. Jede Aufspannsituation des Rohteils ist mit wenigstens einer bestimmten Bearbeitungssituation des Rohteils, d. h. einer Bearbeitungsposition bzw. Bearbeitungsausrichtung des Rohteils (im Weiteren wird allein der Begriff "Bearbeitungssituation" verwendet, welcher eine bestimmte Aufspannposition bzw. Aufspannausrichtung des Rohteils beinhaltet), korreliert.

Erfindungsgemäß wird das Rohteil in wenigstens einer Aufspannsituation aufgespannt, in welcher die Zentralachse des Rohteils winklig zu einer vertikalen Achse bzw. Ebene liegt; die Zentralachse des Rohteils liegt damit (abgesehen von einem etwaigen Schnittpunkt) außerhalb einer vertikalen Achse bzw. Ebene. Das mechanisch zu bearbeitende Rohteil wird in der Aufspannsituation sonach so angeordnet, dass die Zentralachse des Rohteils winklig zu einer vertikalen Achse bzw. Ebene, d. h. nicht parallel zu einer vertikalen Achse bzw. Ebene, liegt. Für ein ringscheibenförmiges Rohteil gilt sonach, dass die Scheibenebene des Rohteils in der Aufspannsituation winklig geneigt bzw. verkippt zu einer horizontalen Achse bzw. Ebene ausgerichtet ist bzw. wird; wie sich im Weiteren ergibt, kann die Scheibenebene des Rohteils in der Aufspannsituation insbesondere parallel zu einer vertikalen Achse bzw. Ebene ausgerichtet sein bzw. werden.

Aus der winklig geneigten bzw. verkippten Anordnung bzw. Ausrichtung des Rohteils relativ zu der vertikalen Achse bzw. Ebene - diese kann z. B. durch eine vertikale Maschinenachse eines zur Durchführung des Verfahrens verwendeten Bearbeitungszentrums definiert sein - ergeben sich eine Reihe von Vorteilen für die mechanische Bearbeitung des Rohteils und somit für die Herstellung des herzustellenden ringscheibenförmigen Bauteils. Diese bestehen insbesondere darin, dass eine Ansammlung von bearbeitungsbedingt entstehendem Materialabtrag, d. h. insbesondere Spänen, und/oder Kühlflüssigkeit auf dem zu bearbeitenden Rohteil je nach konkreter Ausrichtung des Rohteils relativ zu der vertikalen Achse erschwert bzw. gar nicht möglich ist. Dies führt zudem dazu, dass die Kühlwirkung und damit die Effizienz der Kühlung des Rohteils während seiner mechanischen Bearbeitung (erheblich) verbessert werden kann, als sich die typischerweise verwendete Kühlflüssigkeit nur erschwert bzw. gar nicht auf dem Rohteil, d. h. für das ringscheibenförmige Rohteil insbesondere einer zu einer Scheibenebene parallelen Oberfläche des Rohteils, ansammeln und dort erwärmen kann. Auch kann der mechanische Bearbeitungsprozess des Rohteils besser (optisch) beobachtet werden; sodass sich auch Vorteile im Hinblick auf eine zu implementierende oder implementierte Prozessüberwachung ergeben. Die genannten Vorteile bestehen insbesondere gegenüber einer bekannten Aufspannung des Rohteils in einer Aufspannsituation, in welcher die Zentralachse des Rohteils in einer vertikalen Achse bzw. Ebene liegt.

Die Aufspannung des Rohteils in der beschriebenen Aufspannsituation erfolgt über eine ein oder mehrere Aufspannelemente, d. h. mehrere Spannbacken, umfassende Aufspanneinrichtung, d. h. z. B. ein Spannfutter, eines zur Durchführung des Verfahrens verwendeten Bearbeitungszentrums. Die bzw. eine verwendete Aufspanneinrichtung ist sonach eingerichtet, das Rohteil in der beschriebenen Aufspannsituation aufzuspannen. Eine entsprechende Aufspanneinrichtung kann auch eingerichtet sein, mehrere unterschiedliche Aufspannsituationen, in welchen die Zentralachse des Rohteils jeweils winklig zu einer vertikalen Achse bzw. Ebene liegt, zu realisieren. Eine entsprechende Aufspanneinrichtung kann in wenigstens einem Bewegungsfreiheitsgrad - hierbei kann es sich um einen translatorischen Bewegungsfreiheitsgrad entlang wenigstens einer Translationsachse und/oder um einen rotatorischen Bewegungsfreiheitsgrad um wenigstens eine Rotationsachse handeln - bewegbar gelagert sein. Eine entsprechende Translations- bzw. Rotationsachse kann z. B. eine durch eine Bearbeitungs- bzw. Maschinenachse eines zur Durchführung des Verfahrens verwendeten Bearbeitungszentrums definiert sein.

In einem auf den zweiten Schritt folgenden dritten Schritt des Verfahrens erfolgt die mechanische Bearbeitung des in der oder den Aufspannsituationen, in welcher bzw. welchen die Zentralachse des Rohteils jeweils winklig zu der vertikalen Achse bzw. Ebene liegt, aufgespannten Rohteils zur Herstellung des ringscheibenförmigen Bauteils. Der mechanischen Bearbeitung des Rohteils liegen dabei insbesondere Daten bezüglich der Endgeometrie des herzustellenden Bauteils zugrunde, sodass eine endkonturnahe bzw. endkonturgenaue Herstellung des Bauteils erfolgt. Die mechanische Bearbeitung des Rohteils umfasst wenigstens einen spanenden bzw. zerspanenden mechanischen Bearbeitungsschritt. Die mechanische Bearbeitung des Rohteils erfolgt zumindest durch Drehen und/oder Fräsen, gegebenenfalls ergänzend durch Bohren.

Die mechanische Bearbeitung des Rohteils erfolgt über wenigstens eine wenigstens ein mechanisches Bearbeitungswerkzeug, d. h. zumindest ein Dreh- und/oder Fräswerkzeug, gegebenenfalls ergänzend ein Bohrwerkzeug umfassende mechanische Bearbeitungseinrichtung. Die mechanische Bearbeitungseinrichtung kann je nach konkreter Ausgestaltung in wenigstens einem Bewegungsfreiheitsgrad - hierbei kann es sich um einen translatorischen Bewegungsfreiheitsgrad entlang wenigstens einer Translationsachse und/oder um einen rotatorischen Bewegungsfreiheitsgrad um wenigstens eine Rotationsachse handeln - relativ zu dem in der Aufspannsituation aufgespannten Rohteil bewegbar gelagert sein.

Insgesamt liegt ein verbessertes Verfahren zur Herstellung eines ringscheibenförmigen Bauteils vor.

Der Winkel zwischen dem in der jeweiligen Aufspannsituation aufgespannten Rohteil und der vertikalen Achse bzw. Ebene liegt erfindungsgemäß zwischen 80 und 100°, insbesondere zwischen 85 und 95°.

Gemäß einer konkreten Ausgestaltung des Verfahrens kann das Rohteil derart aufgespannt werden, dass dessen Zentralachse in einem Winkel von 90° relativ zu der vertikalen Achse bzw. Ebene ausgerichtet ist. Die Zentralachse des Rohteils kann in der Aufspannsituation damit horizontal ausgerichtet sein bzw. werden. Die Zentralachse des Rohteils kann in der Aufspannsituation damit koaxial bzw. konzentrisch zu einer Bearbeitungsachse eines zur Durchführung des Verfahrens verwendeten Bearbeitungszentrums ausgerichtet sein. Die Scheibenebene eines ringscheibenförmigen Rohteils kann in der Aufspannsituation damit vertikal ausgerichtet sein bzw. werden.

Die vorstehend genannten Winkel bzw. Winkelbereiche können im oder entgegen dem Uhrzeigersinn verstanden werden.

In einer ersten oder in einer zweiten Aufspannsituation erfolgt eine vollständige mechanische Bearbeitung einer parallel zu einer Zentralebene, d. h. für ein ringscheibenförmiges Rohteil parallel zu einer Scheibenebene, liegenden Oberfläche des Rohteils, d. h. z. B. einer Ober- bzw. Unterseite des Rohteils. Eine solche mechanische Bearbeitung bedeutet eine bezüglich einer ringscheibenförmigen Geometrie des Rohteils axial erfolgende mechanische Bearbeitung des Rohteils, sodass ein ringscheibenförmiges Rohteil, insbesondere durch Drehen, z. B. mit dieses axial durchsetzenden Durchgangs- oder Sacklochbohrungen, zur Ausbildung einer Nabe des herzustellenden Bauteils, versehen wird. Ergänzend kann eine solche mechanische Bearbeitung eine bezüglich einer ringscheibenförmigen Geometrie des Rohteils radial erfolgende mechanische Bearbeitung des Rohteils bedeuten, sodass ein ringscheibenförmiges Rohteil z. B. mit sich radial erstreckenden, insbesondere ringförmigen, Vertiefungen versehen wird. Entsprechend wird derart auch eine Nabe des herzustellenden Bauteils ausgebildet. Eine gezielte Veränderung der Querschnittsgeometrie des Rohteils ist möglich.

Weiterhin erfolgt in der ersten Aufspannsituation eine vollständige mechanische Bearbeitung des Außenumfangs des Rohteils, d. h. für das ringscheibenförmige Rohteil einer den Außenumfang bildenden Mantelfläche des Rohteils. Eine solche Bearbeitung bedeutet eine bezüglich einer ringscheibenförmigen Geometrie des Rohteils axial (bezüglich der Zentralachse des Rohteils) erfolgende Bearbeitung des Rohteils, sodass ein ringscheibenförmiges Rohteil durch Drehen und/oder Fräsen mit einer bestimmten, die Laufflächen eines herzustellenden Rads bildenden Außenumfangskontur versehen wird. Über eine mechanische Bearbeitung des in der Aufspannsituation aufgespannten Rohteils erfolgt demnach (auch) eine Bearbeitung der Außenkontur bzw. der Mantelfläche des herzustellenden ringscheibenförmigen Bauteils, d. h. des Bereichs der Laufflächen eines herzustellenden Rads. Auch hier ist eine gezielte Veränderung der Querschnittsgeometrie des Rohteils möglich.

Das Rohteil ist in der ersten Aufspannsituation über an einem axial gegebenenfalls schulterartig, hervorspringenden oder, z. B. bohrungsartig, ausgenommenen, Abschnitt des Innendurchmessers des Rohteils angreifende Aufspannelemente aufgespannt. Als zur Aufspannung des Rohteils verwendete Aufspannelemente werden am Innendurchmesser bzw. an einer entsprechenden Oberfläche angreifende Spannbacken verwendet. Insbesondere können mehrere umfangsmäßig gleichmäßig verteilt angeordnete Spannbacken verwendet werden. Die Spannbacken können derart angeordnet sein, dass eine Zentrierung des Rohteils möglich ist.

In der ersten Aufspannsituation, in welcher sowohl eine mechanische Bearbeitung einer parallel zu einer Zentralebene, d. h. für ein ringscheibenförmiges Rohteil parallel zu einer Scheibenebene, liegenden Oberfläche des Rohteils, d. h. z. B. einer Ober- bzw. Unterseite des Rohteils, als auch eine mechanische Bearbeitung des Außenumfangs des Rohteils erfolgt, können ebenso nicht bearbeitbare bzw. bearbeitbare Abschnitte des Rohteils nach einer Dreh- bzw. Wendebewegung des abschnittsweise mechanisch bearbeiteten Rohteils mechanisch bearbeitet werden.. Das abschnittsweise mechanisch bearbeitete Rohteil kann nach mechanischer Bearbeitung in der Aufspannsituation sonach aus der Aufspannsituation bewegt, gedreht bzw. gewendet werden - hierbei handelt es sich insbesondere um eine 180° Drehung bzw. Wendung - und in die(selbe) Aufspannsituation zurückbewegt und erneut aufgespannt werden, um sodann die übrigen noch nicht mechanisch bearbeiteten Anschnitte zu bearbeiten. Das Rohteil kann sodann an gegenüber liegenden Abschnitt des Rohteils aufgespannt werden; die Aufspannelemente greifen in der erneuten Aufspannung des Rohteils in der Aufspannsituation im Vergleich zu der ersten bzw. vorherigen Aufspannung in der Aufspannsituation an gegenüber liegenden Abschnitt des Rohteils an.

Hierfür kann ein geeignetes Handling des abschnittsweise mechanisch bearbeiteten Rohteils erforderlich sein, welches z. B. über eine Handlingeinrichtung, d. h. insbesondere eine Robotereinrichtung, realisierbar ist.

Das Rohteil kann auch in mehreren, insbesondere bezüglich der jeweiligen räumlichen Ausrichtung des Rohteils, unterschiedlichen, d. h. insbesondere örtlich bzw. räumlich unterschiedlich angeordneten bzw. beabstandeten, Aufspannsituationen, d. h. wenigstens in einer ersten Aufspannsituation und in einer zweiten Aufspannsituation, aufgespannt werden. Jede Aufspannsituation zeichnet sich dadurch aus, dass mehrere Spannbacken wenigstens einer Aufspanneinrichtung an einem Abschnitt des Rohteils unter Ausbildung einer Aufspannung des Rohteils angreifen. Dabei ist das Rohteil in jeweiligen Aufspannsituationen derart aufgespannt, dass die Zentralachse des Rohteils jeweils winklig, d. h. insbesondere rechtwinklig, zu der vertikalen Achse bzw. Ebene liegt.

Unabhängig von der konkreten Aufspannung und der sich daraus ergebenden räumlichen Ausrichtung des Rohteils relativ zu der vertikalen Achse bzw. Ebene, erfolgt, wie erwähnt, in jeder Aufspannsituation eine mechanische Bearbeitung eines bestimmten, insbesondere freiliegenden und somit mechanisch bearbeitbaren, Abschnitts des Rohteils. Jede Aufspannsituation korreliert damit typischerweise mit einer bestimmten Bearbeitungssituation des Rohteils.

Erfindungsgemäß erfolgt eine vollständige mechanische Bearbeitung einer parallel zu einer Zentralebene, d. h. für ein ringscheibenförmiges Rohteil parallel zu einer Scheibenebene, liegenden Oberfläche des Rohteils, d. h. z. B. einer Ober- bzw. Unterseite des Rohteils, für welche das Rohteil in einer ersten oder in einer zweiten, sich von der ersten Aufspannsituation unterscheidenden Aufspannsituation aufgespannt wird. Eine solche mechanische Bearbeitung beinhaltet eine bezüglich einer ringscheibenförmigen Geometrie des Rohteils axial erfolgende mechanische Bearbeitung des Rohteils, wobei eine Nabe ausgebildet wird. Ergänzend kann eine solche mechanische Bearbeitung eine bezüglich einer ringscheibenförmigen Geometrie des Rohteils radial erfolgende mechanische Bearbeitung des Rohteils bedeuten, sodass ein ringscheibenförmiges Rohteil z. B. mit sich radial erstreckenden, insbesondere ringförmigen, Vertiefungen versehen wird. In allen Fällen ist eine gezielte Veränderung der Querschnittsgeometrie des Rohteils möglich.

Erfindungsgemäß wird das Rohteil in einer ersten Aufspannsituation aufgespannt, in welcher eine vollständige mechanische Bearbeitung des Außenumfangs des Rohteils, d. h. für ein ringscheibenförmiges Rohteil einer den Außenumfang bildenden Mantelfläche des Rohteils, erfolgt. Eine solche Bearbeitung beinhaltet eine bezüglich einer ringscheibenförmigen Geometrie des Rohteils axial (bezüglich der Zentralachse des Rohteils) erfolgende Bearbeitung des Rohteils, sodass ein ringscheibenförmiges Rohteil durch Drehen und/oder Fräsen, mit einer bestimmten, die Laufflächen eines herzustellenden Rads bildenden Außenumfangskontur versehen wird. Über eine mechanische Bearbeitung des in der ersten Aufspannsituation aufgespannten Rohteils erfolgt demnach eine Bearbeitung der Außenkontur bzw. der Mantelfläche des herzustellenden ringscheibenförmigen Bauteils, d. h. des Bereichs der Laufflächen eines herzustellenden Rads. Auch hier ist in allen Fällen eine gezielte Veränderung der Querschnittsgeometrie des Rohteils möglich.

Das Rohteil wird in der ersten beispielhaften Aufspannsituation über an einem, axial gegebenenfalls schulterartig, hervorspringenden oder, z. B. bohrungsartig, ausgenommenen, Abschnitt des Innendurchmessers des Rohteils angreifende Aufspannelemente aufgespannt. Als zur Aufspannung des Rohteils in der ersten Aufspannsituation verwendete Aufspannelemente werden am Innendurchmesser bzw. an einer entsprechenden Oberfläche angreifende Spannbacken verwendet. Insbesondere können mehrere umfangsmäßig gleichmäßig verteilt angeordnete Spannbacken verwendet werden. Die Spannbacken können derart angeordnet sein, dass eine Zentrierung des Rohteils in der ersten Aufspannsituation möglich ist.

Das Rohteil kann in einer Alternative der Erfindung in einer zweiten Aufspannsituation über an dem Außenumfang des Rohteils angreifende Aufspannelemente aufgespannt werden. Für das ringscheibenförmige Rohteil gilt entsprechend, dass dieses in der zweiten Aufspannsituation über an einer den Außenumfang bildenden Mantelfläche angreifende Aufspannelemente aufgespannt wird. Als zur Aufspannung des Rohteils in der zweiten Aufspannsituation verwendete Aufspannelemente werden am Außenumfang bzw. an einer den Außenumfang bildenden Mantelfläche angreifende Spannbacken verwendet. Insbesondere können mehrere außenumfangsmäßig gleichmäßig verteilt angeordnete Spannbacken verwendet werden. Die Spannbacken können derart angeordnet sein, dass eine Zentrierung des Rohteils in der zweiten Aufspannsituation möglich ist.

Ein Rohteil kann sonach in mehreren unterschiedlichen, gegebenenfalls einander gegenüberliegend angeordneten, Aufspannsituationen aufgespannt und mechanisch bearbeitet werden. Jede Aufspannsituation ist mit einer bestimmten Bearbeitungssituation, d. h. insbesondere einem bestimmten mechanischen Bearbeitungsschritt, korreliert. Wie erwähnt, können in jeder Aufspann- bzw. Bearbeitungssituation die in dieser jeweils freiliegenden Abschnitte des aufgespannten Rohteils mechanisch bearbeitet werden.

Entsprechend kann das Rohteil z. B. von einer ersten Aufspannsituation, in welcher die Zentralachse des mechanisch zu bearbeitenden Rohteils winklig zu der vertikalen Achse bzw. Ebene liegt, in wenigstens eine weitere Aufspannsituation, in welcher die Zentralachse des mechanisch zu bearbeitenden Rohteils winklig zu einer vertikalen Achse bzw. Ebene liegt, überführt werden. Die jeweiligen Aufspannsituationen können einander gegenüberliegen. Dies eröffnet die im Folgenden näher beschriebene Möglichkeit, mehrere Rohteile bereitzustellen und diese zumindest teilweise gleichzeitig mechanisch zu bearbeiten. Es können sonach mehrere eine Zentralachse aufweisende mechanisch zu bearbeitende Rohteile bereitgestellt und unter Ausbildung jeweiliger herzustellender ringscheibenförmiger Bauteile mechanisch bearbeitet werden. Die mechanische Bearbeitung jeweiliger Bauteile kann, wie sich im Weiteren ergibt, zumindest teilweise zeitgleich erfolgen; hieraus ergeben sich positive Aspekte für die Effizienz bzw. Produktivität des Verfahrens.

Es ist z. B. möglich, dass ein mechanisch zu bearbeitendes erstes Rohteil zunächst in einer ersten Aufspannsituation, in welcher die Zentralachse des ersten Rohteils winklig zu der vertikalen Achse bzw. Ebene liegt, aufgespannt und in einem ersten mechanischen Bearbeitungsschritt in der ersten Aufspannsituation mechanisch bearbeitet wird. Nach Abschluss des ersten mechanischen Bearbeitungsschritts kann das bereits abschnittsweise bearbeitete erste Rohteil in eine (von der ersten Aufspannsituation unterschiedliche) zweite Aufspannsituation, in welcher die Zentralachse des ersten Rohteils wiederum winklig zu der vertikalen Achse bzw.

Ebene liegt, überführt, in dieser aufgespannt und in einem zweiten mechanischen Bearbeitungsschritt mechanisch bearbeitet überführt werden. Ein mechanisch zu bearbeitendes weiteres Rohteil kann während oder nach Aufspannung des ersten Rohteils in der zweiten Aufspannsituation in der ersten Aufspannsituation, in welcher die Zentralachse des weiteren Rohteils winklig zu der vertikalen Achse bzw. Ebene liegt, aufgespannt und in einem ersten mechanischen Bearbeitungsschritt in der ersten Aufspannsituation mechanisch bearbeitet werden. Nach Abschluss des ersten mechanischen Bearbeitungsschritts kann das bereits abschnittsweise bearbeitete weitere Rohteil in die oder eine zweite Aufspannsituation, in welcher die Zentralachse des weiteren Rohteils wiederum winklig zu der vertikalen Achse bzw. Ebene liegt, überführt, in dieser aufgespannt und in einem zweiten mechanischen Bearbeitungsschritt mechanisch bearbeitet werden. Dies erfolgt - sofern es sich bei der zweiten Aufspannsituation um diejenige zweite Aufspannsituation handelt, in welcher das erste Rohteil dem zweiten mechanischen Bearbeitungsschritt unterzogen wird - typischerweise erst dann, wenn das erste Rohteil die zweite Aufspannsituation verlassen hat, d. h. der zweite mechanische Bearbeitungsschritt des ersten Rohteils in der zweiten Aufspannsituation abgeschlossen ist. Mithin kann eine zeitlich aufeinanderfolgende mechanische Bearbeitung mehrerer Rohteile in mehreren Aufspannsituationen, d. h. eine Bearbeitung mehrerer Rohteile in mehreren Aufspannsituationen nacheinander, erfolgen. Der zweite mechanische Bearbeitungsschritt des ersten Rohteils kann zumindest teilweise zeitgleich mit erstem mechanischen Bearbeitungsschritt des weiteren Rohteils (und umgekehrt) erfolgen. Das Prinzip lässt sich auf mehr als zwei Aufspannsituationen und entsprechend mehr als zwei mit diesen korrelierte mechanische Bearbeitungsschritte erweitern.

Weiterhin ist es möglich, dass ein mechanisch zu bearbeitendes erstes Rohteil zunächst in einer ersten Aufspannsituation, in welcher die Zentralachse des ersten Rohteils winklig zu der vertikalen Achse bzw. Ebene liegt, aufgespannt und in einem ersten mechanischen Bearbeitungsschritt in der ersten Aufspannsituation mechanisch bearbeitet wird. Nach Abschluss des ersten mechanischen Bearbeitungsschritts kann das bereits abschnittsweise mechanisch bearbeitete Rohteil in eine zweite Aufspannsituation, in welcher die Zentralachse des ersten Rohteils wiederum winklig zu der vertikalen Achse bzw. Ebene liegt, überführt, in dieser aufgespannt und in einem zweiten mechanischen Bearbeitungsschritt mechanisch bearbeitet werden. Ein mechanisch zu bearbeitendes weiteres Rohteil kann zunächst in der zweiten Aufspannsituation, in welcher die Zentralachse des zweiten Rohteils winklig zu der vertikalen Achse bzw. Ebene liegt, aufgespannt und in einem ersten mechanischen Bearbeitungsschritt in der zweiten Aufspannsituation mechanisch bearbeitet werden. Dabei kann nach Abschluss des ersten mechanischen Bearbeitungsschritts des ersten Rohteils in der ersten Aufspannsituation und nach Abschluss des ersten mechanischen Bearbeitungsschritts des weiteren Rohteils in der zweiten Aufspannsituation das erste Rohteil in die zweite Aufspannsituation, in welcher die Zentralachse des ersten Rohteils winklig zu der vertikalen Achse bzw. Ebene liegt, überführt, in dieser aufgespannt und in einem zweiten mechanischen Bearbeitungsschritt mechanisch bearbeitet wird, und nach Abschluss des ersten mechanischen Bearbeitungsschritts des weiteren Rohteils in der zweiten Aufspannsituation und des ersten mechanischen Bearbeitungsschritts des ersten Rohteils in der ersten Aufspannsituation das weitere Rohteil in die erste Aufspannsituation, in welcher die Zentralachse des weiteren Rohteils winklig zu der vertikalen Achse bzw. Ebene liegt, überführt, in dieser aufgespannt und in einem zweiten mechanischen Bearbeitungsschritt mechanisch bearbeitet werden. Mithin kann eine gleichzeitige mechanische Bearbeitung der Rohteile in jeweiligen Aufspannsituationen erfolgen. Die in jeweiligen ersten Bearbeitungsschritten bearbeiteten Rohteile können ihre jeweiligen ersten Aufspannsituationen sodann tauschen und nach Aufspannung in jeweiligen zweiten Aufspannsituationen jeweiligen zweiten mechanischen Bearbeitungsschritten unterzogen werden. Der erste mechanische Bearbeitungsschritt des ersten Rohteils kann sonach zeitgleich mit dem ersten mechanischen Bearbeitungsschritt des weiteren Rohteils erfolgen. Auch der zweite mechanische Bearbeitungsschritt des ersten Rohteils kann sonach zeitgleich mit dem zweiten mechanischen Bearbeitungsschritt des weiteren Rohteils erfolgen. Das Prinzip lässt sich auf mehr als zwei Aufspannsituationen und entsprechend mehr als zwei mit diesen korrelierte mechanische Bearbeitungsschritte erweitern.

In allen Fällen gilt, dass jeder Aufspannsituation wenigstens eine Bearbeitungseinrichtung zugeordnet sein kann. Die der jeweiligen Aufspannsituation zugeordnete Bearbeitungseinrichtung ist eingerichtet, eine in der jeweiligen Aufspannsituation bzw. der damit korrelierten Bearbeitungssituation vorzunehmende mechanische Bearbeitung des aufgespannten Rohteils durchzuführen. Die der jeweiligen Aufspannsituation zugeordnete Bearbeitungseinrichtung kann hierfür in wenigstens einem Bewegungsfreiheitsgrad - hierbei kann es sich, wie erwähnt, um einen translatorischen Bewegungsfreiheitsgrad entlang wenigstens einer Translationsachse und/oder um einen rotatorischen Bewegungsfreiheitsgrad um wenigstens eine Rotationsachse handeln - relativ zu dem in der jeweiligen Aufspannsituation aufgespannten Rohteil bewegbar gelagert sein. Prinzipiell ist es alternativ oder ergänzend jedoch auch denkbar, dass das in der jeweiligen Aufspannsituation aufgespannte Rohteil in wenigstens einem Bewegungsfreiheitsgrad, d. h. z. B. einem Bewegungsfreiheitsgrad entlang einer Translationsachse und/oder um eine Rotationsachse, relativ zu der der jeweiligen Aufspannsituation zugeordneten mechanischen Bearbeitungseinrichtung bewegbar gelagert ist; wie weiter oben erwähnt wurde, kann auch eine Aufspanneinrichtung in wenigstens einem Bewegungsfreiheitsgrad bewegbar sein.

Die Überführung eines, gegebenenfalls bereits mechanisch bearbeiteten, Rohteils von einer ersten Aufspannsituation in eine zweite bzw. wenigstens eine weitere Aufspannsituation (oder umgekehrt) kann in einer bestimmten Überführungsposition, in welcher eine Überführung bzw. Übergabe eines Rohteils von einer ersten Aufspannsituation in wenigstens eine weitere Aufspannsituation (oder umgekehrt) möglich ist, erfolgen. Ein von der ersten Aufspannsituation in eine weitere Aufspannsituation (oder umgekehrt) zu überführendes, gegebenenfalls bereits mechanisch bearbeitetes, Rohteil kann sonach in eine entsprechende Überführungsposition - diese kann z. B. zwischen den beiden Aufspannsituationen angeordnet sein - bewegt werden.

Die Überführung eines, gegebenenfalls bereits mechanisch bearbeiteten, Rohteils von einer ersten Aufspannsituation in eine zweite bzw. wenigstens eine weitere Aufspannsituation (oder umgekehrt) kann über eine ein oder mehrere Handlingelemente, d. h. z. B. ein oder mehrere Greiferelemente, umfassende Handlingeinrichtung, d. h. z. B. einen Handlingroboter, eines zur Durchführung des Verfahrens verwendeten Bearbeitungszentrums erfolgen. Die bzw. eine verwendete Handlingeinrichtung ist sonach eingerichtet, ein gegebenenfalls bereits mechanisch bearbeitetes, Rohteil von einer ersten Aufspannsituation in wenigstens eine zweite bzw. wenigstens eine weitere Aufspannsituation zu überführen (oder umgekehrt). Eine entsprechende Handlingeinrichtung kann als eine wenigstens ein Greiferelement umfassende Greifereinrichtung ausgebildet sein oder wenigstens eine solche umfassen. Eine Greifereinrichtung kann z. B. als ein (mehrachsiger) Greifroboter ausgebildet sein.

Wie sich aus vorstehenden Ausführungen ergibt, kann das Verfahren in einem Bearbeitungszentrum zur spanenden Bearbeitung von (metallischen) Werkstücken ausgeführt werden.

Die Offenbarung betrifft neben dem Verfahren daher auch ein Bearbeitungszentrum. Das Bearbeitungszentrum umfasst wenigstens eine Aufspanneinrichtung, welche eingerichtet ist, ein mechanisch zu bearbeitendes Rohteil aufzuspannen, sowie wenigstens eine wenigstens ein mechanisches Bearbeitungswerkzeug umfassende mechanische Bearbeitungseinrichtung, welche eingerichtet ist, ein aufgespanntes Rohteil mechanisch zu bearbeiten.

Da das Bearbeitungszentrum zur Herstellung wenigstens eines ringscheibenförmigen Bauteils aus einem mechanisch zu bearbeitenden Rohteil gemäß einem wie vorstehend beschriebenen Verfahren und somit zur Durchführung des vorstehend beschriebenen Verfahrens eingerichtet ist, gelten sämtliche Ausführungen im Zusammenhang mit dem Verfahren analog für das Bearbeitungszentrum.

Die vertikale Ebene bezüglich welcher das Rohteil winklig aufspannbar bzw. aufgespannt ist, ist typischerweise lotrecht zu einer (horizontalen) Bearbeitungs- bzw. Maschinenachse des Bearbeitungszentrums ausgerichtet.

Die Erfindung ist anhand von Ausführungsbeispielen in den Zeichnungen erläutert. Dabei zeigen:
Fig. 1, 2 jeweils eine Prinzipdarstellung eines in einer Aufspannsituation aufgespannten Rohteils gemäß einem Ausführungsbeispiel; und
Fig. 3, 4 jeweils eine Prinzipdarstellung eines zur Durchführung des Verfahrens verwendeten Bearbeitungszentrums gemäß einem Ausführungsbeispiel.

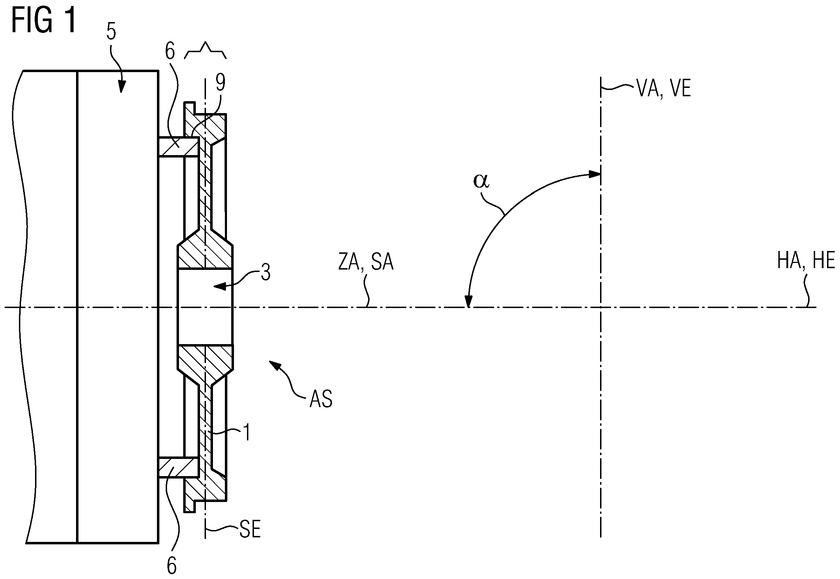

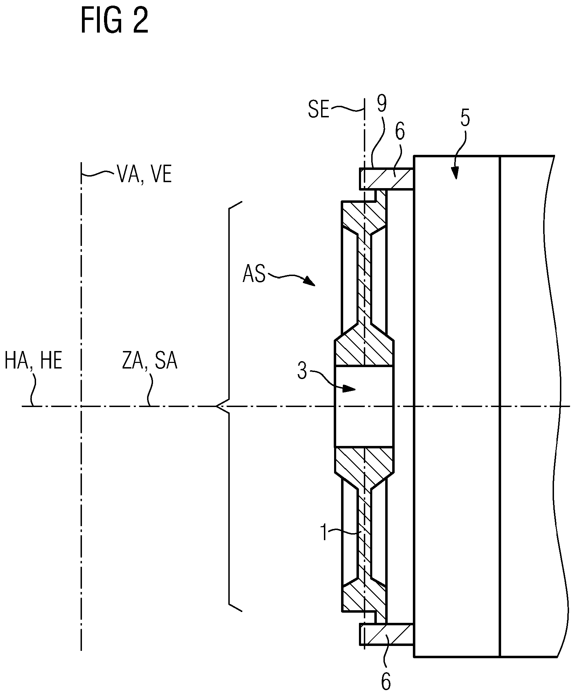

Die Fig. 1, 2 zeigen jeweils eine Prinzipdarstellung eines in einer Aufspannsituation AS aufgespannten Rohteils 1 gemäß einem Ausführungsbeispiel. Die Aufspannung des Rohteils 1 in den in den Fig. 1, 2 gezeigten Aufspannsituationen AS erfolgt im Rahmen der Durchführung eines Verfahrens zur Herstellung eines ringscheibenförmigen Bauteils 2. Bei dem herzustellenden Bauteil 2 handelt es sich insbesondere um ein Antriebsrad für Schienenfahrzeuge, d. h. um ein Eisenbahnrad, insbesondere um ein Eisenbahnrad für Hochgeschwindigkeitszüge.

Das im Zusammenhang mit den in den Fig. gezeigten Ausführungsbeispielen beschriebene Verfahren umfasst die folgenden Schritte:
In einem ersten Schritt des Verfahrens wird wenigstens ein mechanisch, d. h. spanend, zu bearbeitendes Rohteil 1 bereitgestellt. Das Rohteil 1 weist in den in den Fig. gezeigten Ausführungsbeispielen eine rotationssymmetrische ringscheibenförmige Geometrie mit einer mittigen bzw. zentralen Ausnehmung 3 auf. Die Zentralachse des Rohteils 1 ist mit "ZA" bezeichnet; ersichtlich handelt es sich bei der Zentralachse ZA des Rohteils 1 gleichermaßen um die mit "SA" bezeichnete Symmetrieachse des Rohteils 1. Die lotrecht zu der Zentralachse ZA ausgerichtete und somit von der Zentralachse ZA des Rohteils 1 in einem rechten Winkel durchsetzte Scheibenebene des Rohteils 1 ist mit "SE" bezeichnet.

Typischerweise wird ein metallisches Rohteil 1, d. h. z. B. ein Guss- bzw. Schmiedeteil, bereitgestellt, entsprechend handelt es sich bei dem herzustellenden Bauteil 2 um ein metallisches Bauteil.

Das Rohteil 1 wird in einem auf den ersten Schritt folgenden zweiten Schritt des Verfahrens in einer ersten Aufspannsituation AS1 aufgespannt (vgl. Fig. 1). Anhand der Fig. ist ersichtlich, dass das Rohteil 1 in einer Aufspannsituation AS aufgespannt wird, in welcher die Zentralachse ZA des Rohteils 1 winklig zu einer vertikalen Achse VA bzw. Ebene VE (diese kann bzw. können z. B. durch eine vertikale Maschinenachse eines zur Durchführung des Verfahrens verwendeten Bearbeitungszentrums 4 definiert sein) und damit (abgesehen von einem etwaigen Schnittpunkt) außerhalb einer vertikalen Achse VE bzw. Ebene VE liegt. Das Rohteil 1 wird in der Aufspannsituation AS sonach so angeordnet, dass die Zentralachse ZA des Rohteils 1 winklig zu der vertikalen Achse VA bzw. Ebene VE und damit nicht parallel zu der vertikalen Achse VA bzw. Ebene VE liegt. Die Scheibenebene SE des Rohteils 1 ist in der Aufspannsituation AS winklig geneigt bzw. verkippt zu einer horizontalen Achse HA bzw. Ebene HE (diese kann bzw. können z. B. durch eine horizontale Maschinenachse eines zur Durchführung des Verfahrens verwendeten Bearbeitungszentrums 4 definiert sein) ausgerichtet.

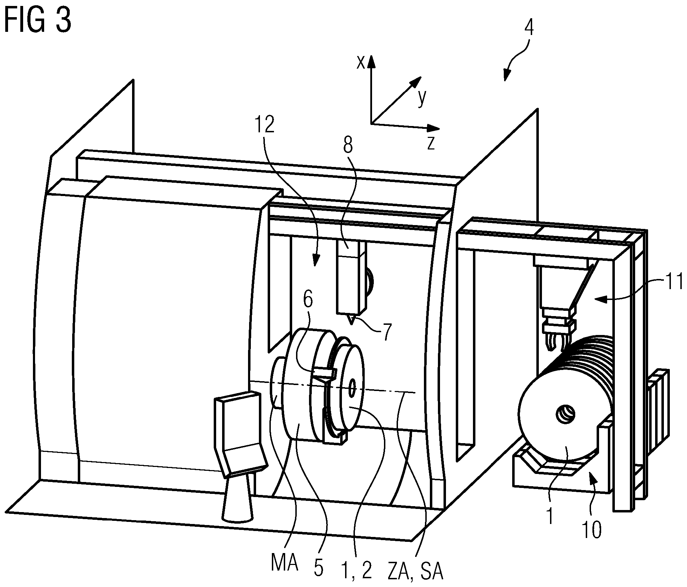

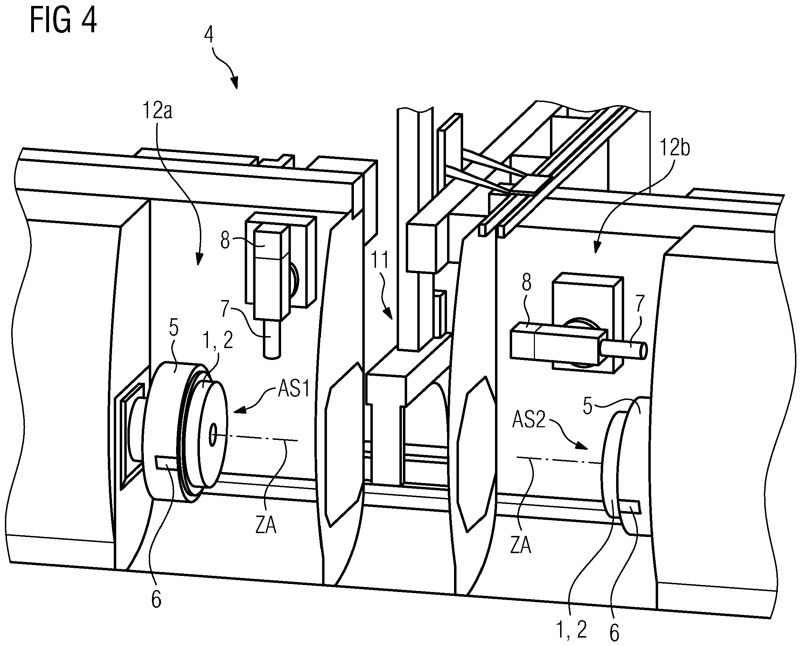

Ersichtlich ist das Rohteil 1 in den in den Fig. gezeigten Ausführungsbeispielen derart aufgespannt, dass die Zentralachse ZA des Rohteils 1 in einem Winkel α zwischen 80 und 100°, nämlich konkret in einem Winkel von 90° relativ zu der vertikalen Achse VA bzw. Ebene VE ausgerichtet ist. Die Zentralachse ZA des Rohteils 1 ist in der Aufspannsituation AS entsprechend horizontal, die Scheibenebene SE des Rohteils 1 entsprechend vertikal ausgerichtet. Die Zentralachse ZA des Rohteils 1 ist in der Aufspannsituation AS damit typischerweise koaxial bzw. konzentrisch zu einer Bearbeitungsachse BA eines zur Durchführung des Verfahrens verwendeten Bearbeitungszentrums 4 ausgerichtet (vgl. Fig. 3, 4).

Aus der beschriebenen winklig geneigten bzw. verkippten Anordnung bzw. Ausrichtung des Rohteils 1 relativ zu der vertikalen Achse VA bzw. Ebene VE ergeben sich eine Reihe von Vorteilen für die mechanische Bearbeitung des Rohteils 1 und somit für die Herstellung des herzustellenden Bauteils 2. Diese bestehen insbesondere darin, dass eine Ansammlung von bearbeitungsbedingt entstehendem Materialabtrag, d. h. insbesondere Spänen, und/oder Kühlflüssigkeit auf dem zu bearbeitenden Rohteil 1 erschwert bzw. gar nicht möglich ist. Dies führt zudem dazu, dass die Kühlwirkung und damit die Effizienz der Kühlung des Rohteils 1 während seiner mechanischen Bearbeitung (erheblich) verbessert werden kann, als sich die typischerweise verwendete Kühlflüssigkeit nur erschwert bzw. gar nicht auf dem Rohteil 1, d. h. insbesondere einer zu der Scheibenebene SE des Rohteils 1 parallelen Oberfläche des Rohteils 1, ansammeln und dort erwärmen kann. Auch kann der mechanische Bearbeitungsprozess des Rohteils 1 besser (optisch) beobachtet werden; sodass sich auch Vorteile im Hinblick auf eine zu implementierende oder implementierte Prozessüberwachung ergeben.

Die Aufspannung des Rohteils 1 in der jeweiligen Aufspannsituation AS erfolgt in den in den Fig. gezeigten Ausführungsbeispielen über wenigstens eine mehrere Aufspannelemente 6, d. h. Spannbacken, umfassende Aufspanneinrichtung 5, d. h. z. B. ein Spannfutter, eines zur Durchführung des Verfahrens verwendeten Bearbeitungszentrums 4. Die Aufspanneinrichtung 5 ist sonach eingerichtet, das Rohteil 1 in der beschriebenen jeweiligen Aufspannsituation AS aufzuspannen.

In einem auf den zweiten Schritt folgenden dritten Schritt des Verfahrens erfolgt die mechanische Bearbeitung des in der jeweiligen Aufspannsituation AS aufgespannten Rohteils 1 zur Herstellung des Bauteils 2. Der mechanischen Bearbeitung des Rohteils 1 liegen dabei insbesondere Daten bezüglich der Endgeometrie des herzustellenden Bauteils 2 zugrunde, sodass eine endkonturnahe bzw. endkonturgenaue Herstellung des Bauteils 2 erfolgt. Die mechanische Bearbeitung des Rohteils 1 umfasst wenigstens einen spanenden bzw. zerspanenden mechanischen Bearbeitungsschritt. Die mechanische Bearbeitung des Rohteils 1 kann erfolgt zumindest durch Drehen und/oder Fräsen, gegebenenfalls ergänzend durch Bohren.

Die mechanische Bearbeitung des Rohteils 1 erfolgt über wenigstens eine wenigstens ein mechanisches Bearbeitungswerkzeug 7, d. h. zumindest ein Dreh- und/oder Fräswerkzeug, gegebenenfalls ergänzend ein Bohrwerkzeug umfassende mechanische Bearbeitungseinrichtung 8 eines zur Durchführung des Verfahrens verwendeten Bearbeitungszentrums 4 (vgl. Fig. 3, 4). Eine entsprechende mechanische Bearbeitungseinrichtung 8 kann je nach konkreter Ausgestaltung in wenigstens einem Bewegungsfreiheitsgrad - hierbei kann es sich um einen translatorischen Bewegungsfreiheitsgrad entlang wenigstens einer Translationsachse und/oder um einen rotatorischen Bewegungsfreiheitsgrad um wenigstens eine Rotationsachse handeln - relativ zu dem in der Aufspannsituation AS aufgespannten Rohteil 1 bewegbar gelagert sein. Entsprechende Bewegungsfreiheitsgrade bzw. Translations- bzw. Rotationsachsen sind in den Fig. 3, 4 durch die Achsen x, y und z angedeutet.

Anhand der Fig. 1, 2 ist ersichtlich, dass das bzw. ein Rohteil 1 in mehreren unterschiedlichen Aufspannsituationen AS aufgespannt werden kann. Jede Aufspannsituation AS zeichnet sich dadurch aus, dass mehrere Spannbacken wenigstens einer Aufspanneinrichtung 5 an einem Abschnitt des Rohteils 1 unter Ausbildung einer Aufspannung des Rohteils 1 angreifen. Dabei ist das Rohteil 1, wie in den Fig. 1, 2 gezeigt, in jeweiligen Aufspannsituationen AS derart aufgespannt, dass die Zentralachse ZA des Rohteils 1 jeweils winklig, d. h. in den in den Fig. gezeigten Ausführungsbeispielen lotrecht, zu der vertikalen Achse VA bzw. Ebene VE liegt. In jeder Aufspannsituation AS erfolgt eine mechanische Bearbeitung eines bestimmten, insbesondere freiliegenden und somit mechanisch bearbeitbaren, Abschnitts des Rohteils 1. Jede Aufspannsituation AS korreliert damit typischerweise mit einer bestimmten Bearbeitungssituation BS des Rohteils 1.

Fig. 1 zeigt eine beispielhafte erste Aufspannsituation, in welcher eine vollständige mechanische Bearbeitung des Außenumfangs des Rohteils 1, d. h. einer den Außenumfang bildenden Mantelfläche des Rohteils 1, erfolgt (vgl. die den bearbeitbaren Bereich andeutende geschweifte Klammer). Eine solche mechanische Bearbeitung beinhaltet eine bezüglich der ringscheibenförmigen Geometrie des Rohteils 1 axial bezüglich der Zentralachse ZA des Rohteils 1 erfolgende mechanische Bearbeitung des Rohteils 1, sodass das Rohteil 1, durch Drehen und/oder Fräsen, z. B. mit einer bestimmten, die Laufflächen eines herzustellenden Rads bildenden Außenumfangskontur versehen wird. Über eine mechanische Bearbeitung des in der ersten Aufspannsituation aufgespannten Rohteils 1 erfolgt demnach eine Bearbeitung der Außenkontur bzw. der Mantelfläche des herzustellenden Bauteils 2, d. h. des Bereichs der Laufflächen eines herzustellenden Rads.

Fig. 1 zeigt, dass das Rohteil 1 in der ersten Aufspannsituation über an einem axial schulterartig, hervorspringenden Abschnitt 9 des Innendurchmessers des Rohteils 1 angreifende Aufspannelemente 6 aufgespannt wird. Als zur Aufspannung des Rohteils 1 in der ersten Aufspannsituation verwendete Aufspannelemente 6 werden am Innendurchmesser bzw. an einer entsprechenden Oberfläche angreifende Spannbacken verwendet. Ersichtlich können mehrere umfangsmäßig gleichmäßig verteilt angeordnete Spannbacken verwendet werden, welche derart angeordnet sind, dass eine Zentrierung des Rohteils 1 in der ersten Aufspannsituation möglich ist.

In der in Fig. 1 gezeigten ersten Aufspannsituation kann auch eine vollständige mechanische Bearbeitung einer parallel zu der Scheibenebene SE liegenden Oberfläche des Rohteils 1, d. h. z. B. einer Ober- bzw. Unterseite des Rohteils 1, erfolgen. Eine solche mechanische Bearbeitung beinhaltet eine bezüglich der ringscheibenförmigen Geometrie des Rohteils 1 axial erfolgende mechanische Bearbeitung des Rohteils 1, sodass das Rohteil 1, insbesondere durch Bohren, z. B. mit dieses axial durchsetzenden Durchgangs- oder Sacklochbohrungen versehen wird. Ergänzend kann eine solche mechanische Bearbeitung eine bezüglich der ringscheibenförmigen Geometrie des Rohteils 1 radial erfolgende mechanische Bearbeitung des Rohteils 1 bedeuten, sodass das Rohteil 1 z. B. mit sich radial erstreckenden, insbesondere ringförmigen, Vertiefungen versehen wird. Eine gezielte Veränderung der Querschnittsgeometrie des Rohteils 1 ist möglich.

Fig. 2 zeigt eine beispielhafte zweite Aufspannsituation des Rohteils 1, in welcher eine vollständige mechanische Bearbeitung einer parallel zu der Scheibenebene SE liegenden Oberfläche des Rohteils 1, d. h. z. B. einer Ober- bzw. Unterseite des Rohteils 1, erfolgt bzw. erfolgen kann (vgl. die den bearbeitbaren Bereich andeutende geschweifte Klammer). Eine solche mechanische Bearbeitung beinhaltet eine bezüglich der ringscheibenförmigen Geometrie des Rohteils 1 axial erfolgende mechanische Bearbeitung des Rohteils 1, sodass das Rohteil 1 mit einer Nabe ausgebildet wird. Ergänzend kann eine solche mechanische Bearbeitung eine bezüglich der ringscheibenförmigen Geometrie des Rohteils 1 radial erfolgende mechanische Bearbeitung des Rohteils 1 bedeuten, sodass das Rohteil 1 z. B. mit sich radial erstreckenden, insbesondere ringförmigen, Vertiefungen versehen wird.

Fig. 2 zeigt, dass das Rohteil 1 in der beispielhaften zweiten Aufspannsituation über an dem Außenumfang des Rohteils 1 bzw. über an einer den Außenumfang bildenden Mantelfläche des Rohteils 1 angreifende Aufspannelemente 6 aufgespannt wird. Als zur Aufspannung des Rohteils 1 in der beispielhaften zweiten Aufspannsituation verwendete Aufspannelemente 6 werden am Außenumfang bzw. an der den Außenumfang bildenden Mantelfläche angreifende Spannbacken verwendet. Insbesondere können mehrere außenumfangsmäßig gleichmäßig verteilt angeordnete Spannbacken verwendet werden. Die Spannbacken können derart angeordnet sein, dass eine Zentrierung des Rohteils 1 in der zweiten Aufspannsituation möglich ist.

Die Fig. 1, 2 zeigen sonach, dass ein Rohteil 1 in mehreren unterschiedlichen Aufspannsituationen AS aufgespannt und mechanisch bearbeitet werden kann. Jede Aufspannsituation AS ist mit einer bestimmten Bearbeitungssituation korreliert. In jeder Aufspann- bzw. Bearbeitungssituation können die in dieser jeweils freiliegenden Abschnitte des aufgespannten Rohteils 1 mechanisch bearbeitet werden.

Fig. 3 zeigt eine Prinzipdarstellung eines zur Durchführung des Verfahrens verwendbaren bzw. verwendeten Bearbeitungszentrums 4 gemäß einem Ausführungsbeispiel. Das Bearbeitungszentrum 4 umfasst eine Aufspanneinrichtung 5, welche eingerichtet ist, ein mechanisch zu bearbeitendes Rohteil 1 in einer Aufspannsituation AS, in welcher die Zentralachse ZA des Rohteils winklig zu einer vertikalen Achse VA bzw. Ebene VE liegt, aufzuspannen, sowie wenigstens eine wenigstens ein mechanisches Bearbeitungswerkzeug 7, d. h. zumindest ein Dreh- und/oder Fräswerkzeug, umfassende mechanische Bearbeitungseinrichtung 8, d. h. zumindest eine Dreh- und/oder Fräseinrichtung, welche eingerichtet ist, ein in der Aufspannsituation AS aufgespanntes Rohteil 1 mechanisch zu bearbeiten. Gezeigt ist ferner ein optionaler Rohteilspeicher 10, über welchen vermittels des Bearbeitungszentrums 4 mechanisch zu bearbeitende Rohteile 1 bereitstellbar sind. Die Rohteile 1 können dem Rohteilspeicher 10 über eine z. B. als ein- oder mehrachsiger Handlingroboter ausgebildete Handlingeinrichtung 11 entnommen und einem Bearbeitungsraum 12 des Bearbeitungszentrums 4 zugeführt, dort entsprechend aufgespannt und mechanisch bearbeitet werden.

Anhand von Fig. 3 ist erkennbar, dass die vertikale Achse VA bzw. Ebene VE bezüglich welcher Rohteile 1 winklig aufspannbar bzw. aufgespannt sind, typischerweise lotrecht zu einer (horizontalen) Bearbeitungs- bzw. Maschinenachse MA des Bearbeitungszentrums 4 ausgerichtet ist.

Anhand von Fig. 3 lässt sich ferner erläutern, dass in der dort gezeigten oder einer entsprechenden Aufspannsituation sowohl eine mechanische Bearbeitung einer parallel zu einer Zentralebene, d. h. für ein ringscheibenförmiges Rohteil 1 parallel zu einer Scheibenebene, liegenden Oberfläche des Rohteils 1, d. h. z. B. einer Ober- bzw. Unterseite des Rohteils 1, als auch eine mechanische Bearbeitung des Außenumfangs des Rohteils 1 erfolgen kann. In der Aufspannsituation nicht bearbeitbare bzw. bearbeitbare Abschnitte des Rohteils 1 können nach einer Dreh- bzw. Wendebewegung des abschnittsweise mechanisch bearbeiteten Rohteils 1 mechanisch bearbeitet werden. Das abschnittsweise mechanisch bearbeitete Rohteil 1 kann nach mechanischer Bearbeitung in der Aufspannsituation sonach aus der Aufspannsituation bewegt, gedreht bzw. gewendet werden - hierbei handelt es sich insbesondere um eine 180° Drehung bzw. Wendung - und in die(selbe) Aufspannsituation zurückbewegt und erneut aufgespannt werden, um sodann die übrigen noch nicht mechanisch bearbeiteten Anschnitte zu bearbeiten. Das Rohteil 1 kann sodann an gegenüber liegenden Abschnitt des Rohteils 1 aufgespannt werden; die Aufspannelemente 6 greifen in der erneuten Aufspannung des Rohteils 1 in der Aufspannsituation im Vergleich zu der ersten bzw. vorherigen Aufspannung in der Aufspannsituation an gegenüber liegenden Abschnitt des Rohteils 1 an.

Hierfür kann ein geeignetes Handling des abschnittsweise mechanisch bearbeiteten Rohteils 1 erforderlich sein, welches z. B. über eine Handlingeinrichtung 11, d. h. insbesondere eine Robotereinrichtung, realisierbar ist. Die Handlingeinrichtung 11 kann sonach eingerichtet sein, ein bereits abschnittsweise mechanisch bearbeitetes Rohteil 1 aus der Aufspannsituation zu entnehmen, zu drehen bzw. zu wenden und zurück in die(selbe) Aufspannsituation zu überführen.

Fig. 4 zeigt eine Prinzipdarstellung eines zur Durchführung des Verfahrens verwendbaren bzw. verwendeten Bearbeitungszentrums 4 gemäß einem weiteren Ausführungsbeispiel. Das in Fig. 4 gezeigte Bearbeitungszentrum 4 verfügt im Gegensatz zu dem Ausführungsbeispiel gemäß Fig. 3 über mehrere Bearbeitungsräume 12a, 12b, in welchen jeweils eine mechanische Bearbeitung eines Rohteils 1 möglich ist. Ersichtlich verfügt jeder Bearbeitungsraum 12a, 12b daher über eine eigene mechanische Bearbeitungseinrichtung 8.

Anhand des in Fig. 4 gezeigten Ausführungsbeispiels lässt sich erläutern, dass ein Rohteil 1 von einer ersten Aufspannsituation AS bzw. ersten Bearbeitungssituation, in welcher die Zentralachse ZA des Rohteils 1 winklig zu der vertikalen Achse VA bzw. Ebene VE liegt, in wenigstens eine weitere Aufspannsituation AS2 bzw. weitere Bearbeitungssituation, in welcher die Zentralachse ZA des Rohteils 1 winklig zu der vertikalen Achse VA bzw. Ebene VE liegt, überführt werden kann. Dies eröffnet die Möglichkeit, mehrere Rohteile 1 bereitzustellen und zumindest teilweise gleichzeitig mechanisch zu bearbeiten.

Anhand des in Fig. 4 gezeigten, zwei separate Bearbeitungsräume 12a, 12b umfassenden Bearbeitungszentrums 4 ist ersichtlich, dass es z. B. möglich ist, dass ein mechanisch zu bearbeitendes erstes Rohteil 1 zunächst in einer ersten Aufspannsituation AS1, in welcher die Zentralachse ZA des ersten Rohteils 1 winklig zu der vertikalen Achse VA bzw. Ebene VE liegt, aufgespannt und in einem ersten mechanischen Bearbeitungsschritt in der ersten Aufspannsituation AS1 mechanisch bearbeitet wird (vgl. Fig. 4). Nach Abschluss des ersten mechanischen Bearbeitungsschritts kann das bereits abschnittsweise bearbeitete erste Rohteil 1 in eine (von der ersten Aufspannsituation AS1 unterschiedliche) zweite Aufspannsituation AS2, in welcher die Zentralachse ZA des ersten Rohteils 1 wiederum winklig zu der vertikalen Achse VA bzw. Ebene V2 liegt, überführt, in dieser aufgespannt und in einem zweiten mechanischen Bearbeitungsschritt mechanisch bearbeitet überführt werden. Ein mechanisch zu bearbeitendes zweites Rohteil 1 kann während oder nach Aufspannung des ersten Rohteils 2 in der zweiten Aufspannsituation AS2 in der ersten Aufspannsituation AS1 aufgespannt und in einem ersten mechanischen Bearbeitungsschritt in der ersten Aufspannsituation AS1 mechanisch bearbeitet werden. Nach Abschluss des ersten mechanischen Bearbeitungsschritts kann das bereits abschnittsweise bearbeitete zweite Rohteil 1 in die zweite Aufspannsituation AS2 überführt, in dieser aufgespannt und in einem zweiten mechanischen Bearbeitungsschritt mechanisch bearbeitet werden. Dies erfolgt typischerweise erst dann, wenn das erste Rohteil 1 die zweite Aufspannsituation AS2 verlassen hat, d. h. der zweite mechanische Bearbeitungsschritt des ersten Rohteils 1 in der zweiten Aufspannsituation AS2 abgeschlossen ist. Mithin kann eine zeitlich aufeinanderfolgende mechanische Bearbeitung mehrerer Rohteile 1 in mehreren Aufspannsituationen AS1, AS2, d. h. eine Bearbeitung mehrerer Rohteile 1 in mehreren Aufspannsituationen AS1, AS2 nacheinander, erfolgen. Der zweite mechanische Bearbeitungsschritt des ersten Rohteils 1 kann zumindest teilweise zeitgleich mit erstem mechanischen Bearbeitungsschritt des zweiten Rohteils 1 (und umgekehrt) erfolgen.

Weiterhin ist es möglich, dass ein mechanisch zu bearbeitendes erstes Rohteil 1 zunächst in einer ersten Aufspannsituation AS1, in welcher die Zentralachse ZA des ersten Rohteils 1 winklig zu der vertikalen Achse VA bzw. Ebene VE liegt, aufgespannt und in einem ersten mechanischen Bearbeitungsschritt in der ersten Aufspannsituation AS1 mechanisch bearbeitet wird. Nach Abschluss des ersten mechanischen Bearbeitungsschritts kann das bereits abschnittsweise mechanisch bearbeitete Rohteil 1 in eine zweite Aufspannsituation AS2, in welcher die Zentralachse ZA des ersten Rohteils 1 wiederum winklig zu der vertikalen Achse VA bzw. Ebene VE liegt, überführt, in dieser aufgespannt und in einem zweiten mechanischen Bearbeitungsschritt mechanisch bearbeitet werden. Ein mechanisch zu bearbeitendes zweites Rohteil 1 kann zunächst in der zweiten Aufspannsituation AS2 aufgespannt und in einem ersten mechanischen Bearbeitungsschritt in der zweiten Aufspannsituation AS2 mechanisch bearbeitet werden. Dabei kann nach Abschluss des ersten mechanischen Bearbeitungsschritts des ersten Rohteils 1 in der ersten Aufspannsituation und nach Abschluss des ersten mechanischen Bearbeitungsschritts des zweiten Rohteils 1 in der zweiten Aufspannsituation AS2 das erste Rohteil 1 in die zweite Aufspannsituation AS2 überführt, in dieser aufgespannt und in einem zweiten mechanischen Bearbeitungsschritt mechanisch bearbeitet wird, und nach Abschluss des ersten mechanischen Bearbeitungsschritts des zweiten Rohteils 1 in der zweiten Aufspannsituation AS2 und des ersten mechanischen Bearbeitungsschritts des ersten Rohteils 1 in der ersten Aufspannsituation AS1 das zweite Rohteil 1 in die erste Aufspannsituation AS1 überführt, in dieser aufgespannt und in einem zweiten mechanischen Bearbeitungsschritt mechanisch bearbeitet werden. Mithin kann eine gleichzeitige mechanische Bearbeitung der Rohteile 1 in jeweiligen Aufspannsituationen AS1, AS2 erfolgen. Die in jeweiligen ersten Bearbeitungsschritten bearbeiteten Rohteile 1 können ihre jeweiligen ersten Aufspannsituationen AS1, AS2 sodann tauschen und nach Aufspannung in jeweiligen zweiten Aufspannsituationen AS1, AS2 jeweiligen zweiten mechanischen Bearbeitungsschritten unterzogen werden. Der erste mechanische Bearbeitungsschritt des ersten Rohteils 1 kann sonach zeitgleich mit dem ersten mechanischen Bearbeitungsschritt des zweiten Rohteils 1 erfolgen. Auch der zweite mechanische Bearbeitungsschritt des ersten Rohteils 1 kann sonach zeitgleich mit dem zweiten mechanischen Bearbeitungsschritt des zweiten Rohteils 1 erfolgen.

Aus vorstehenden Ausführungen ergibt sich, dass jeder Aufspannsituation AS1, AS2 eine Bearbeitungseinrichtung 8 zugeordnet ist, welche eingerichtet ist, eine in der jeweiligen Aufspannsituation AS1, AS2 bzw. der damit korrelierten Bearbeitungssituation vorzunehmende mechanische Bearbeitung eines aufgespannten Rohteils 1 durchzuführen. Die der jeweiligen Aufspannsituation AS1, AS2 zugeordnete Bearbeitungseinrichtung 8 kann hierfür in wenigstens einem Bewegungsfreiheitsgrad relativ zu dem in der jeweiligen Aufspannsituation AS1, AS2 aufgespannten Rohteil 1 bewegbar gelagert sein. Prinzipiell ist es alternativ oder ergänzend jedoch auch denkbar, dass das in der jeweiligen Aufspannsituation AS1, AS2 aufgespannte Rohteil 1 in wenigstens einem Bewegungsfreiheitsgrad, d. h. z. B. einem Bewegungsfreiheitsgrad entlang einer Translationsachse und/oder um eine Rotationsachse, relativ zu der der jeweiligen Aufspannsituation AS1, AS2 zugeordneten mechanischen Bearbeitungseinrichtung 8 bewegbar gelagert ist.

Die Überführung eines, gegebenenfalls bereits mechanisch bearbeiteten, Rohteils 1 von einer ersten Aufspannsituation AS1 in die zweite Aufspannsituation AS2 (oder umgekehrt) kann über eine bereits im Zusammenhang mit den im Fig. 3 gezeigten Ausführungsbeispiel erwähnte, ein oder mehrere Handlingelemente umfassende Handlingeinrichtung 11, d. h. z. B. einen Handlingroboter, erfolgen. Die Handlingeinrichtung 11 ist sonach eingerichtet, ein, gegebenenfalls bereits mechanisch bearbeitetes, Rohteil 1 von der ersten Aufspannsituation AS1 in die zweite Aufspannsituation AS2 zu überführen (oder umgekehrt).

## Patentansprüche

1. Verfahren zur Herstellung wenigstens eines ringscheibenförmigen Bauteils (2) in Form eines eine Nabe aufweisenden Rads für ein Schienenfahrzeug, **gekennzeichnet durch** die Schritte:
- Bereitstellen wenigstens eines eine Zentralachse (ZA) aufweisenden, eine ringscheibenförmige Geometrie aufweisenden, spanend zu bearbeitenden Rohteils (1), wobei der spanende bearbeitete Außenumfang des Rohteils (1) eine spätere Lauffläche des Bauteils (2) bildet;
- Anordnen bzw. Aufspannen des Rohteils (1) in einer oder mehreren, jeweils eine bestimmte Aufspannposition oder bzw. Aufspannausrichtung des Rohteils (1) beinhaltenden Aufspannsituationen (AS), in welchen die Zentralachse (ZA) des Rohteils (1) jeweils winklig zu einer vertikalen Achse (VA) liegt, wobei der Winkel zwischen der Zentralachse (ZA) des in der jeweiligen Aufspannsituation (AS) aufgespannten Rohteils (1) und der vertikalen Achse (VA) zwischen 80 und 100° liegt;
- spanendes Bearbeiten des aufgespannten Rohteils (1) zur Herstellung des ringscheibenförmigen Bauteils (2), wobei
das Rohteil (1) in einer ersten solchen Aufspannsituation (AS1) aufgespannt wird, in welcher ersten Aufspannsituation in einem ersten Bearbeitungsschritt eine vollständige spanende Bearbeitung des Außenumfangs des Rohteils (1) erfolgt, wobei die spanende Bearbeitung eine bezüglich der Geometrie des Rohteils (1) axial erfolgende Bearbeitung des Rohteils (1) beinhaltet, wobei das Rohteil durch Drehen und/oder Fräsen mit einer die Laufflächen des herzustellenden Rads (2) bildenden Außenumfangskontur versehen wird, wobei das Rohteil (1) in der ersten Aufspannsituation über an einem axial hervorspringenden oder ausgenommenen Abschnitt (9) eines Innendurchmessers des Rohteils (1) angreifende Spannbacken aufgespannt wird, und wobei
in der ersten Aufspannsituation (AS1) oder in einer zweiten solchen, sich von der ersten Aufspannsituation (AS1) unterscheidenden Aufspannsituation (AS2), in welcher das Rohteil (1) über am Außenumfang bzw. an einer den Außenumfang bildenden Mantelfläche des Rohteils (1) angreifende Spannbacken aufgespannt wird, in einem zweiten Bearbeitungsschritt eine vollständige spanende Bearbeitung einer parallel zu einer Scheibenebene (SE) des Rohteils (1) liegenden Oberfläche des Rohteils (1) erfolgt, wobei die spanende Bearbeitung eine bezüglich der Geometrie des Rohteils (1) axial erfolgende spanende Bearbeitung des Rohteils (1) beinhaltet, wobei ein Innendurchmesser oder ein Bereich eines Innendurchmessers des Rohteils (1) zur Ausbildung einer Nabe des herzustellenden Bauteils (1) bearbeitet wird.

2. Verfahren nach Anspruch 1, wobei das Rohteil (1) zumindest in der ersten Aufspannsituation (AS1) derart aufgespannt ist, dass die Zentralachse (ZA) des Rohteils (1) in einem Winkel von 90° relativ zu der vertikalen Achse (VA) ausgerichtet ist.

3. Verfahren nach einem der vorhergehenden Ansprüche, wobei
- das Rohteil (1) zunächst in der ersten Aufspannsituation (AS1) aufgespannt und in dem ersten spanenden Bearbeitungsschritt spanend bearbeitet wird, und wobei das Rohteil nach Abschluss des ersten spanenden Bearbeitungsschritts von der ersten Aufspannsituation (AS1) in die zweite Aufspannsituation (AS2) überführt, in dieser aufgespannt und in dem zweiten spanenden Bearbeitungsschritt spanend bearbeitet wird, und wobei
- ein weiteres Rohteil (1) während oder nach Aufspannung des ersten Rohteils (1) in der zweiten Aufspannsituation (AS2) in der ersten Aufspannsituation (AS1) aufgespannt und in einem ersten spanenden Bearbeitungsschritt zumindest abschnittsweise in der ersten Aufspannsituation (AS1) spanend bearbeitet wird,
und nach Abschluss des ersten spanenden Bearbeitungsschritts des weiteren Rohteils (1) in die zweite Aufspannsituation (AS2) oder eine weitere Aufspannsituation (AS), in welcher die Zentralachse (ZA) des weiteren Rohteils (1) winklig zu der vertikalen Achse (VA) liegt, überführt, in dieser aufgespannt und in einem zweiten spanenden Bearbeitungsschritt spanend bearbeitet wird.

4. Verfahren nach einem der Ansprüche 1 oder 2, wobei
- das Rohteil (1) zunächst in der ersten Aufspannsituation (AS1) aufgespannt und in dem ersten spanenden Bearbeitungsschritt spanend bearbeitet wird, und
nach Abschluss des ersten spanenden Bearbeitungsschritts in die zweite Aufspannsituation (AS2) überführt, in dieser aufgespannt und in dem zweiten spanenden Bearbeitungsschritt spanend bearbeitet wird, wobei
- ein weiteres Rohteil (1) zunächst in der zweiten Aufspannsituation (AS2), aufgespannt und in einem ersten spanenden Bearbeitungsschritt zumindest abschnittsweise in der zweiten Aufspannsituation (AS2) spanend bearbeitet wird,
wobei nach Abschluss des ersten spanenden Bearbeitungsschritts des ersten Rohteils (1) in der ersten Aufspannsituation (AS1) und des ersten spanenden Bearbeitungsschritts des weiteren Rohteils (1) in der zweiten Aufspannsituation (AS2) das erste Rohteil (1) in die zweite Aufspannsituation (AS2) überführt, in dieser aufgespannt und in dem zweiten spanenden Bearbeitungsschritt spanend bearbeitet wird, und wobei
nach Abschluss des ersten spanenden Bearbeitungsschritts des weiteren Rohteils (1) in der zweiten Aufspannsituation (AS2) und des ersten spanenden Bearbeitungsschritts des ersten Rohteils (1) in der ersten Aufspannsituation (AS1) das weitere Rohteil (1) in die erste Aufspannsituation (AS1) überführt, in dieser aufgespannt und in einem zweiten spanenden Bearbeitungsschritt spanend bearbeitet wird.

5. Verfahren nach einem der vorhergehenden Ansprüche, wobei ein Eisenbahnrad hergestellt wird.

## Claims

1. A method for producing at least one annular disc-shaped part (2) in the form of a hub-containing wheel for a rail vehicle, **characterized by** the steps:
- providing at least one blank (1) having a central axis (ZA), having an annular disc-shaped geometry, to be machined, wherein the machined outer circumference of the blank (1) forms a later running surface of the component (2);
- arranging or clamping the blank (1) in one or more clamping situations (AS), each containing a specific clamping position or clamping orientation of the blank (1), in which the central axis (ZA) of the blank (1) is angular to a vertical axis (VA), wherein the angle between the central axis (ZA) of the blank (1) clamped in the respective clamping situation (AS) and the vertical axis (VA) is between 80 and 100 °;
- machining of the clamped blank (1) for the production of the annular disc-shaped component (2), wherein
the raw part (1) is clamped in a first such clamping situation (AS1), in which the first clamping situation in a first machining step a complete machining of the outer circumference of the raw part (1) takes place, wherein the machining includes a machining of the raw part (1) axially in relation to the geometry of the raw part (1), wherein the raw part is provided by turning and / or milling with an outer circumference contour forming the treads of the wheel (2) to be manufactured, wherein the raw part (1) is clamped in the first clamping situation over an axially projecting or excluded portion (9) of an inner diameter of the raw part (1) attacking clamping jaws, and wherein
In the first clamping situation (AS1) or in a second such clamping situation (AS2), which differs from the first clamping situation (AS1), in which the raw part (1) is clamped on the outer circumference or on a shell surface of the raw part (1) forming the outer circumference attacking clamping jaws, in a second machining step a complete machining of a surface of the raw part (1) lying parallel to a disk plane (SE) of the raw part (1) takes place, wherein the machining machining includes a machining of the raw part (1) carried out axially with respect to the geometry of the raw part (1), wherein an inner diameter or a region of an inner diameter of the raw part (1) is machined to form a hub of the component (1) to be manufactured.

2. The method of claim 1, wherein the blank (1) is clamped at least in the first clamping situation such that the central axis (ZA) of the blank (1) is aligned at an angle of 90° relative to the vertical axis (VA).

3. The method of any one of the preceding claims, wherein
- the raw part (1) is first clamped in the first clamping situation (AS1) and machined in the first machining step, and wherein the raw part
after completion of the first machining step from the first clamping situation (AS1) to the second clamping situation (AS2) is transferred, clamped in this and machined in the second machining step, and wherein
- another blank (1) is clamped during or after clamping of the first blank (1) in the second clamping situation (AS2) in the first clamping situation (AS1) and is clamped in a first machining step at least partially in the first clamping situation (AS1), and after completion of the first machining step of the further blank (1) is clamped in the second or another clamping situation (AS2), in which the central axis (ZA) of the further blank (1) is angled to the vertical axis (VA), transferred, clamped in this and machined in a second machining step.

4. The method of claim 1 or 2, wherein
- the raw part (1) is first clamped in the first clamping situation (AS1) and machined in the first machining step, and
after completion of the first machining step is transferred to the second clamping situation (AS2), is clamped in this and machined in the second machining step, wherein
- a further blank (1) is first clamped in the second clamping situation (AS2), clamped and machined in a first machining step at least partially in the second clamping situation (AS), wherein after completion of the first machining step of the first blank (1) in the first clamping situation (AS1) and the first machining step of the further blank (1) in the second clamping situation (AS2), the first blank (1) is transferred to the second clamping situation (AS2), clamped in this situation and machined in the second machining step, and wherein
after completion of the first machining step of the further blank (1) in the second clamping situation (AS2) and the first machining step of the first blank (1) in the first clamping situation (AS1), the further blank (1) is transferred to the first clamping situation (AS1), in which it is clamped and machined in a second machining step.

5. The method of any one of the preceding claims, wherein a railway wheel is manufactured.

## Revendications

1. Un procédé de fabrication d'au moins une partie en forme de disque annulaire (2) sous la forme d'une roue à moyeu pour un véhicule ferroviaire, **caractérisée par** les étapes suivantes:
- miser à disposition d'au moins une pièce brute (1) comportant un axe central (ZA), ayant une géométrie en forme de disque annulaire et devant être usinée par enlèvement de copeaux, la circonférence extérieure usinée par enlèvement de copeaux de la pièce brute (1) constituant une bande de roulement ultérieure de la pièce (2);
- placement ou serrage de la pièce brute (1) dans une ou plusieurs situations de serrage (AS) comportant chacune une position de serrage déterminée ou une orientation de serrage de la pièce brute (1), dans lesquelles l'axe central (ZA) de la pièce brute (1) est incliné par rapport à un axe vertical (VA), l'angle entre l'axe central (ZA) de la pièce brute (1) serrée dans la situation de serrage correspondante (AS) et l'axe vertical (VA) étant compris entre 80 et 100°;
- usinage d'étirage de la pièce brute tendue (1) pour la fabrication de la pièce en forme de disque annulaire (2), dans lequel:
la pièce brute (1) est tendue dans une première situation de serrage (AS1), dans laquelle la première situation de serrage dans une première étape d'usinage est un usinage complet de la circonférence extérieure de la pièce brute (1), l'usinage de serrage comprenant un usinage axialement de la pièce brute (1) par rapport à la géométrie de la pièce brute (1), la pièce brute étant pourvue, par tournage et/ou fraisage, d'un contour de la circonférence extérieure formant les bandes de roulement de la roue à fabriquer (2), la pièce brute (1) étant tendue dans la première situation de serrage au-dessus d'une section (9) axialement saillante ou évidée d'un diamètre intérieur de la pièce brute (1), et
dans la première situation de serrage (AS1) ou dans une deuxième situation de serrage (AS2) différente de la première situation de serrage (AS1), dans laquelle la pièce brute (1) est serrée sur des mâchoires de serrage (1) attaquant la circonférence extérieure ou sur une surface de gainage de la pièce brute (1) formant la circonférence extérieure, dans une deuxième étape d'usinage, un usinage de serrage complet est effectué sur une surface de la pièce brute (1) parallèle à un plan de disque (SE) de la pièce brute (1), l'usinage de serrage comprenant un usinage de serrage axial de la pièce brute (1) en ce qui concerne la géométrie de la pièce brute (1), dans lequel un diamètre intérieur ou une zone d'un diamètre intérieur de la pièce brute (1) est usiné pour former un moyeu de la pièce à fabriquer (1).

2. Le procédé selon la revendication 1, dans lequel la pièce brute (1) est tendue au moins dans la première situation de serrage de telle sorte que l'axe central (ZA) de la pièce brute (1) est orienté à un angle de 90° par rapport à l'axe vertical (VA).

3. Le procédé selon l'une quelconque des revendications précédentes, dans lequel:
- la pièce brute (1) est d'abord tendue dans la première situation de serrage (AS1) et usinée lors de la première étape d'usinage, et la pièce brute est
à l'issue de la première étape d'usinage par enlèvement de copeaux, de la première situation de serrage (AS1) à la deuxième situation de serrage (AS2), dans laquelle le serrage est effectué et l'usinage par enlèvement de copeaux dans la deuxième étape d'usinage par enlèvement de copeaux, et
- une autre pièce brute (1) est tendue pendant ou après le serrage de la première pièce brute (1) dans la deuxième situation de serrage (AS2) dans la première situation de serrage (AS1) et est usinée dans une première étape d'usinage de serrage au moins par sections dans la première situation de serrage (AS1) et, après la fin de la première étape d'usinage de serrage de la pièce brute supplémentaire (1), est transférée dans la deuxième situation de serrage ou une autre situation de serrage (AS2) dans laquelle l'axe central (ZA) de la pièce brute supplémentaire (1) est incliné vers l'axe vertical (VA), est tendue dans cette dernière et usinée dans une deuxième étape d'usinage de serrage.

4. Le procédé selon la revendication 1 ou 2, dans lequel
- la pièce brute (1) est d'abord tendue dans la première situation de serrage (AS1) et usinée lors de la première étape d'usinage, et
à l'issue de la première étape d'usinage par enlèvement de matière, dans la deuxième situation de serrage (AS2), celle-ci est serrée et celle-ci est usinée par enlèvement de matière lors de la deuxième étape d'usinage par enlèvement de matière,
- une autre pièce brute (1) est d'abord étirée dans la deuxième situation de serrage (AS2), puis étirée dans une première étape d'usinage de serrage au moins par section dans la deuxième situation de serrage (AS), la première pièce brute (1) étant transférée dans la deuxième situation de serrage (AS2) après l'achèvement de la première étape d'usinage de serrage de la première pièce brute (1) dans la première situation de serrage (AS1) et de la première étape d'usinage de serrage de la deuxième pièce brute (1) dans la deuxième situation de serrage (AS2), la première pièce brute (1) étant étirée dans cette dernière et étirée dans la deuxième étape d'usinage de serrage, et
après l'achèvement de la première étape d'usinage de la pièce brute supplémentaire (1) dans la deuxième situation de serrage (AS2) et de la première étape d'usinage de la première pièce brute (1) dans la première situation de serrage (AS1), la pièce brute supplémentaire (1) est transférée dans la première situation de serrage (AS1), dans laquelle elle est serrée et usinée dans une deuxième étape d'usinage de serrage.

5. Le procédé selon l'une quelconque des revendications précédentes, dans lequel une roue de chemin de fer est fabriquée.
